# EUROPÄISCHE PATENTSCHRIFT

(11) **EP 1 198 082 B1**
(45) Veröffentlichungstag und Bekanntmachung des Hinweises auf die Patenterteilung: **05.12.2007**
(21) Anmeldenummer: 01440337.2
(22) Anmeldetag: 09.10.2001
(51) Int. Cl.: H04B 10/08, H04J 14/02

(54) **Optischer Wellenlängenmonitor für passive optische Komponente**
Optical wavelength monitor for passive optical components
Controlleur de longueur d'ondes optiques pour composants optiques passifs

(30) Priorität: 13.10.2000 DE 10050973
(43) Veröffentlichungstag der Anmeldung: 17.04.2002
(73) Patentinhaber: Alcatel Lucent, 75008 Paris (FR)
(72) Erfinder: Lösch, Kurt, 70191 Stuttgart (DE)
(74) Vertreter: Menzietti, Domenico

(56) Entgegenhaltungen:
- FR-A- 2 762 170
- US-A- 5 986 782
- GILES C R ET AL: "CONCATENATED FIBER GRATING OPTICAL MONITOR" IEEE PHOTONICS TECHNOLOGY LETTERS, IEEE INC. NEW YORK, US, Bd. 10, Nr. 10, 1. Oktober 1998 (1998-10-01), Seiten 1452-1454, XP000786678 ISSN: 1041-1135

## Beschreibung

Die Erfindung bezieht sich auf einen optischen Wellenlängenmonitor nach dem Oberbegriff des Anspruches 1 sowie ein Verfahren zur Untersuchung von optischen Signalen nach dem Oberbegriff des Anspruches 7.

Bei der stetigen Nachfrage nach Übertragungskapazitäten im Telekommunikationsbereich (hauptsächlich wegen der Popularisierung vom Internet) wird große Hoffnung in die Anwendung von Frequenzmultiplex gesteckt. Da Glasfasern, die für die Übertragung von optischen Signalen verwendet werden, für einen erweiterten Spektralbereich transparent genug sind, wird ein besserer Nutzungsgrad erreicht, wenn optisches Frequenzmultiplex ("Optical Frequency Division Multiplex, OFDM") oder Wellenlängenmultiplex ("Wave Length Division Multiplex, WLDM") verwendet wird. Hierbei werden eine Anzahl modulierter optischer Träger, deren Frequenzen sich unterscheiden in einem Lichtwellenleiter (meistens Glasfaser) gleichzeitig übertragen. Dies ermöglicht die maximale Menge an optischen Signalen, die in schon vorhandenen optischen Kabeln übertragen werden, erheblich zu erhöhen, ohne neue Kabel verlegen zu müssen.

Die Anzahl der verwendeten Trägerfrequenzen ist parallel zu dieser Entwicklung stetig gestiegen und kann heutzutage über 250 für eine einzige Glasfaser betragen. Da eine so hohe Anzahl von Trägerfrequenzen unweigerlich dazu führt, dass die Abstände zwischen durch die jeweiligen Trägerfrequenzen definierten Kanälen immer kleiner gewählt werden, ist es wesentlich, eine Kontrollmöglichkeit der durch die Trägerfrequenzen übertragenen optischen Signale im Laufe der Übertragungsstrecken einsetzen zu können. In der Regel werden die Kanäle in einem festen Raster angeordnet, z.B. durch einen vom ITU festgelegten Standard, bei dem die Abstände benachbarter Kanäle entweder im Frequenz- oder im Wellenlängenbereich gleich groß sind. Es ist deshalb sehr wichtig, z.B. eine Verschiebung oder Störung von einigen Trägerfrequenzen in deren jeweiligen Kanälen entlang der Übertragungsstrecke so früh wie möglich festzustellen, um sie gegebenenfalls zu korrigieren.

In US 5.777.763 ist ein optisches Modul offenbart, mit dem optische Signale, die in einer optischen Faser übertragen werden, entlang letztere untersucht werden können. Insbesondere können mit Hilfe dieses optischen Moduls die einzelnen Trägerwellenlängen (umgekehrt proportional zu den Trägerfrequenzen) in den jeweiligen Kanälen der übertragenen optischen Signale mit Referenzwellenlängen verglichen werden. Das optische Modul besteht im wesentlichen aus einem zentralen Wellenleitergitter und zwei planaren Linsen, eine davon für den Eingang, die andere für den Ausgang. Dieses optische Modul wird direkt an die zu untersuchende Übertragungsstrecke eingesetzt. Eine optische Eingangsfaser ist mit der Eingangslinse gekoppelt. In ähnlicher Art und Weise ist die Ausgangslinse mit einer optischen Ausgangsfaser gekoppelt. Mit Hilfe des Wellenleitergitters können einzelne Trägerwellenlängen, mit den optische Signale übertragen werden, untersucht werden, in dem Detektoren an bestimmten Stellen dieses optischen Moduls angesetzt werden, um in bestimmten Kanälen rückgestreutes Licht zu messen. Es ist vorgesehen, zwei Detektoren pro zu untersuchenden Kanal anzuschließen. Hiermit kann sowohl die Amplitude der Leistung in den untersuchten Kanälen als auch eine Wellenlängenverschiebung der Trägerwellenlänge gemessen werden. Die Ergebnisse solcher Messungen werden dann verwendet, um gegebenenfalls über eine Rückkopplung die übertragenen optischen Signale zu steuern. Damit ist eine Möglichkeit gegeben, zu hohe Dämpfungen oder Wellenlängenverschiebungen korrigieren zu können.

Dieses optische Modul aus der US 5.777.763 birgt in sich den erheblichen Nachteil, direkt an die Übertragungsstrecke angeschlossen zu werden. Dadurch wird die als Übertragungsstrecke dienende optische Faser unterbrochen, um das optische Modul einbringen zu können. Es erhöht erheblich die Risiken, dass die übertragenen optischen Signale von einem eingesetzten defekten optischen Modul eher negativ beeinflusst werden.

Es ist schon Stand der Technik, ähnliche optische Module zur Untersuchung von Leistungen und/oder Wellenlängenverschiebungen von übertragenen optischen Signalen nicht direkt auf die Übertragungsstrecke einzusetzen, sondern mit Hilfe eines Kopplers ("Tap Coupler") meistens Richtkoppler oder gegebenenfalls Abzweiger ("Splitter") an die Übertragungsstrecke anzuschließen. Dies hat den Vorteil, die übertragenen optischen Signale nicht direkt zu beeinflussen. Doch leidet eine solche Technik an dem daraus zu geringeren abgezweigten Anteil der übertragenen optischen Signale, die eine einwandfreie Untersuchung der optischen Signale erheblich erschwert.

Das Dokument US-A-5 968 782 offenbart ein Wellenlängenmonitor-System.

Der Erfindung liegt die Aufgabe zugrunde, einen optischen Wellenlängenmonitor zu konzipieren, mit dem Leistungen und/oder Wellenlängenverschiebungen von Trägerwellenlängen in unterschiedlichen Kanälen von übertragenen optischen Signalen sehr zuverlässig gemessen werden können, ohne dabei die eigenen übertragenen optischen Signale zu sehr zu beeinflussen.

Die Aufgabe wird erfindungsgemäß durch einen optischen Wellenlängenmonitor nach der Lehre des Anspruches 1 sowie durch ein Verfahren zur Untersuchung von optischen Signalen nach der Lehre des Anspruches 7 gelöst.

Die Verwendung eines Oszillators, um den geringeren extrahierten Anteil der übertragenen optischen Signale nach dem Prinzip eines Lock-in zu verarbeiten, ermöglicht eine einwandfreie Untersuchung von diesen optischen Signalen über einen Koppler durchzuführen. Mit diesem erfindungsgemäßen Aufbau ist es weiterhin möglich, die Vorteile der Verwendung eines Kopplers auszunutzen, d.h. sehr geringere Einflussmöglichkeiten auf die übertragenen optischen Signalen, ohne dabei von dem schlechten Verhältnis der überkoppelten optischen Signale mit dem Rauschen zu sehr eingeschränkt zu sein. Die Modulierung der überkoppelten optischen Signale, vorteilhafterweise zwischen zwei Werten, bietet eine wesentlich höhere Stabilität von Kontrollmessungen an diesen optischen Signalen. Zudem ist die Empfindlichkeit solcher Kontrollmessungen wesentlich besser. Die Verwendung eines solchen optischen Wellenlängenmonitors bietet die Möglichkeit einzelne oder alle verwendeten Kanäle gegebenenfalls gleichzeitig zu untersuchen. Zudem kann vorteilhafterweise gewählt werden zwischen unterschiedlichen Optionen bei der Untersuchung von den optischen Signalen, indem die Referenzwellenlänge der Detektoren mit Hilfe z.B. einer regelbaren Temperaturquelle unterschiedlich eingestellt wird. Ein solcher optischer Wellenlängenmonitor ermöglicht wahlweise Leistungsmessungen entweder von optischen Signalen oder von Rauschen oder auch Wellenlängenverschiebungen dieser optischen Signale in bestimmten Kanälen zu messen, ohne dabei unterschiedliche Aufbauten zu benötigen.

Vorteilhafte Ausgestaltungen der Erfindung ergeben sich aus den abhängigen Ansprüchen, der nachfolgenden Beschreibung und den Zeichnungen.

Ein Ausführungsbeispiel der Erfindung wird nun unter zu Hilfenahme der beiliegenden Zeichnungen weiter erläutert.

Es zeigen:
- Fig. 1: ein Beispiel eines vom Stand der Technik bekannten optischen Wellenlängenmonitors,
- Fig. 2: einen erfindungsgemäßen optischen Wellenlängenmonitor mit dem dazu benötigten Oszillator,
- Fig. 3a bis 3c: Durchlasskurven der Detektoren des optischen Wellenlängenmonitors nach Fig. 2 in drei unterschiedlichen Betriebszuständen,
- Fig. 4a bis 4c: Durchlasskurven der Detektoren des optischen Wellenlängenmonitors nach Fig. 2 in dem Fall, dass zwei Detektoren pro Kanal verwendet werden, in drei unterschiedlichen Betriebszuständen,
- Fig. 5 bis 5c: Durchlasskurven von zwei Detektoren eines optischen Wellenlängenmonitors nach Fig. 2 für einen einzigen Kanal bei drei unterschiedlichen Trägerwellenlängen.

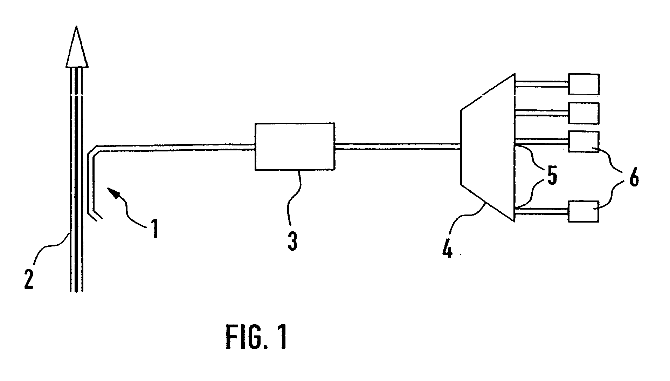

In Fig. 1 ist ein Beispiel eines optischen Wellenlängenmonitors dargestellt, wie sie im Stand der Technik schon verwendet wird. Dabei ist ein Koppler 1 in der direkten Umgebung eines Lichtwellenleiters 2 angeordnet, in dem optische Signale übertragen werden. In dem Koppler 1 werden mindestens teilweise optische Signale aus dem Lichtwellenleiter 2 übergekoppelt, z.B. weniger als 5% und zu einem Wellenlängendemultiplexer 4 ("phased array, PHASAR") weitergeleitet. Entlang der Strecke vom Koppler 1 zum Wellenlängendemultiplexer 4 ist ein optischer Verstärker 3 angeordnet. Dieser Verstärker, der üblicherweise aus einem Halbleiter-, optischen Verstärker ("Semiconductor Optical Amplifier, SOA") oder Erbiumfaser-Verstärker ("Erbium Doped Fiber Amplifier, EDFA") besteht, werden die überkoppelnden optischen Signale verstärkt. An den Ausgängen 5 des Wellenlängenmultiplexers 4 sind optische Detektoren 6 angeschlossen. Mit Hilfe dieser optischen Detektoren 6 wird der vom Koppler 1 überkoppelte Anteil der im Lichtwellenleiter 2 übertragenen optischen Signale untersucht. Entweder ist ein Detektor oder sind zwei Detektoren 6 pro Kanal der optischen Signale vorgesehen.

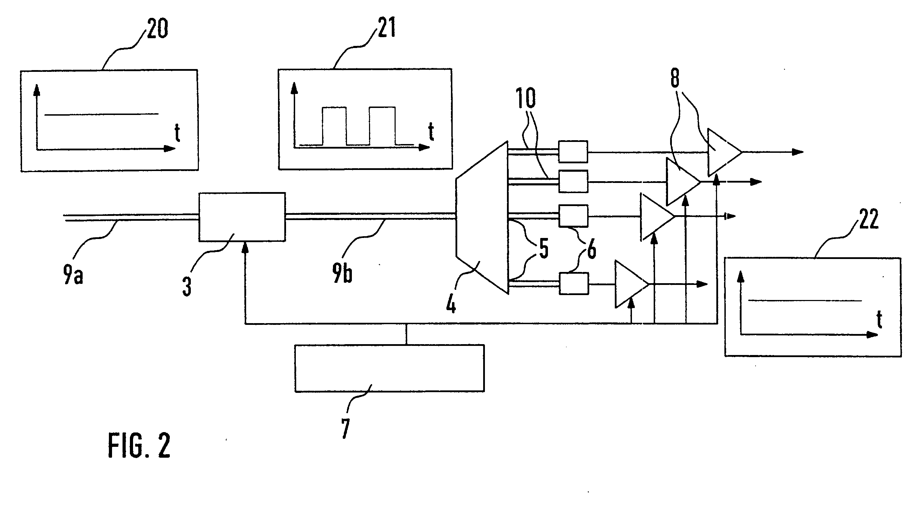

Auf Fig. 2 ist ein erfindungsgemäßer optischer Wellenlängenmonitor aufgezeichnet. Er wird in ähnlicher Art und Weise wie der optische Wellenlängenmonitor aus Fig. 1 über einen auf Fig. 2 nicht gezeichneten Koppler 1 an einem Lichtwellenleiter 2 angeschlossen, indem optische Signale übertragen werden. Die am Koppler 1 überkoppelnden optischen Signale werden über einen Lichtwellenleiter 9a zu dem optischen Verstärker 3 geleitet, um anschließend über einen Lichtwellenleiter 9b zu dem Wellenlängendemultiplexer 4 zu gelangen. An den Ausgängen 5 dieses Wellenlängenmultiplexers 4 sind die optischen Detektoren 6 über Lichtwellenleiter 10 angeschlossen.

Zudem weist der erfindungsgemäße optische Wellenlängenmonitor einen Oszillator 7 auf. Dieser Oszillator 7 ist geeignet, die dem optischen Verstärker 3 zugeführten optischen Signale, d.h. der aus dem Lichtwellenleiter 2 (s. Fig. 1) überkoppelnden Anteil der übertragenen optischen Signale, mit einer Frequenz zu modulieren. Der Oszillator 7 und der optische Verstärker 3 arbeiten dementsprechend nach Art eines Lock-in-Verstärkers.

Vorteilhafterweise kann der Verstärker 3 zwischen zwei Werten nach dem Prinzip eines Choppers moduliert werden. Dabei werden die optischen Signale im optischen Verstärker 3 zwischen einem minimalen Wert, der dem Absorptionswert entspricht, und einem maximalen Wert der dem verstärkten Wert entspricht, oszillieren. Ein kontinuierliches optisches Signal 20, das über den Lichtwellenleiter 9a an den Eingang des optischen Verstärkers 3 übermittelt wird, wird den Wellenlängendemultiplexer 4 über den Lichtwellenleiter 9b in einer Form wie auf Fig. 2 mit 21 dargestellt erreichen. Die Detektoren 6, die über Lichtwellenleiter 10 an den Ausgängen 5 des Wellenlängenmultiplexers 4 angeschlossen sind, werden Messungen von Trägerwellenlängen in den jeweiligen Kanälen durchführen können, mit dem erheblichen Vorteil, dass eine Unterscheidung zwischen dem einen minimalen und dem anderen maximalen Wert deutlich erzielt werden kann. Alle Probleme, die mit Gleichströmen ("DC-current") auftreten, wie z.B. eine Änderung in der Abhängigkeit der Umgebungstemperatur ("drift"), werden somit umgangen.

An den optischen Detektoren 6 ist jeweils ein Gleichrichterverstärker 8 angeschlossen, um die von dem optischen Verstärker 6 elektrisch umgewandelten Signale zu bearbeiten. Diese Gleichrichterverstärker 8 sind gegebenenfalls wie auf Fig. 2 gezeigt von dem Oszillator 7 gesteuert. In diesem Fall wird der Oszillator 7 eine Steuerung der jeweiligen Gleichrichterverstärker 8 mit gleicher Frequenz wie beim optischen Verstärker 3 angewendet, durchführen. Die elektrischen Signale an den jeweiligen Gleichrichterverstärker 8 werden entweder addiert oder subtrahiert, um am Ausgang der Gleichrichterverstärker 8 einen charakteristischen Gleichstrom 22 für die jeweiligen Kanäle der optischen Signale zu bekommen. Diese Gleichströme 22 können dann dazu verwendet werden, eine Rückkopplung auf den in dem Lichtwellenleiter 2 übertragenen optischen Signalen durchzuführen.

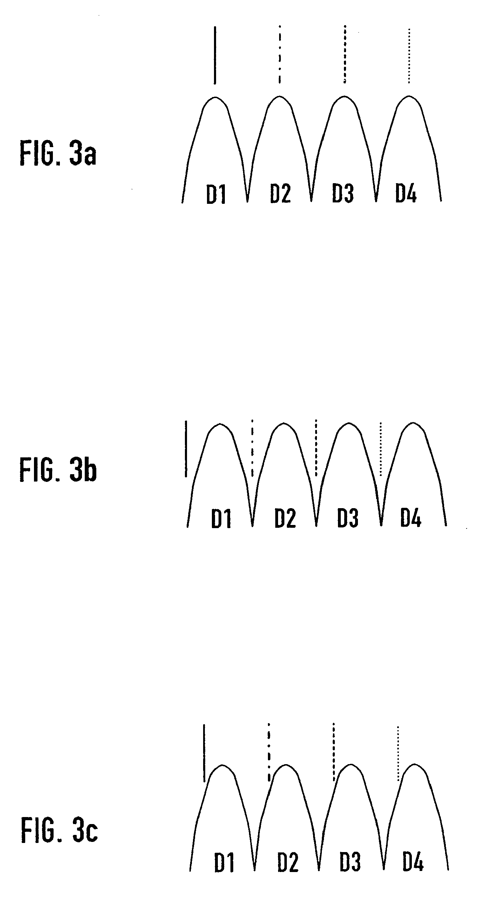

Auf den Fig. 3a bis 3c sind Durchlasskurven von vier der optischen Detektoren 6 für drei unterschiedliche Betriebszustände gezeichnet. Ein Detektor pro Kanal ist vorgesehen, und die vier Detektoren messen optische Signale in benachbarten Kanälen. Die drei unterschiedlichen Betriebszustände unterscheiden sich dadurch, dass die Referenzwellenlängen der jeweiligen Kanäle, die jeweils durch einen senkrechten Strich auf den Fig. 3a bis 3c dargestellt sind, an unterschiedlichen Stellen der Durchlasskurven abgestimmt sind. In Fig. 3a sind die Referenzwellenlänge auf die Maxima der Durchlasskurven zentriert. In diesem Fall kann mit Hilfe der Detektoren eine Variation der Amplituden der Trägerwellenlängen z.B. in Abhängigkeit der Zeit gemessen werden. In Fig. 3b stimmen die Referenzwellenlängen mit den Minima der Durchlasskurve überein. Dadurch kann die Amplitude des Rauschens in oder zwischen den jeweiligen Kanälen gemessen werden. In Fig. 3c sind die Referenzwellenlängen auf jeweils einen Punkt mit größter Steifheit der Durchlasskurven abgestimmt. Dies ermöglicht entweder eine Wellenlängenverschiebung der Trägerwellenlänge oder eine Änderung deren Amplitude zu messen.

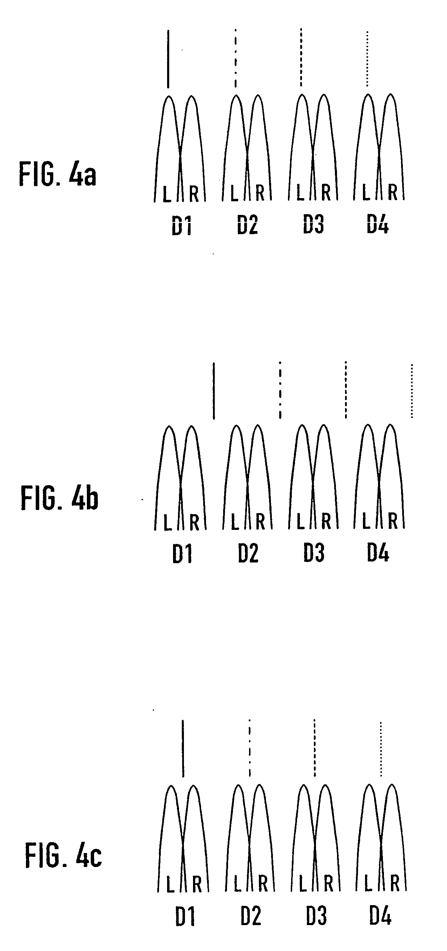

Auf Fig. 4a bis 4c sind ähnliche Durchlasskurven von optischen Detektoren 6 gezeichnet, wobei diesmal zwei Detektoren 6 pro Kanal verwendet werden. Die jeweils zwei Detektoren pro Kanal sind an Ausgänge 5 des Wellenlängendemultiplexer 4 entsprechend angeschlossen, dass ihre Durchlasskurve gegeneinander verschoben sind und einen gemeinsamen überlappenden Bereich aufweisen. Auf Fig. 4a sind die Referenzwellenlängen der jeweiligen Kanäle ähnlich wie auf Fig. 3a an den Maxima dieser Durchlasskurven abgestimmt, um eine Messung der Amplitude der Trägerwellenlänge zu ermöglichen. Auf Fig. 4b sind die Referenzwellenlänge gleich wie auf Fig. 3b zwischen den nichtüberlappenden Bereichen der Durchlasskurven abgestimmt, um Rauschmessungen zu ermöglichen.

Auf Fig. 4c sind die jeweiligen Kreuzungspunkte von zwei sich überlappenden Durchlasskurven in einem Kanal auf die jeweilige Referenzwellenlänge dieses Kanals zentriert. Mit Hilfe dieses Betriebszustandes ist es möglich, nicht nur eine Wellenlängenverschiebung der Trägerwellenlänge eines Kanals bezüglich der zugehörigen Referenzwellenlänge zu bestimmen, sondern gleichzeitig auch in welche Richtung diese Änderung eingetreten ist. Somit ist es möglich zu unterscheiden, ob sich die Trägerwellenlänge in Richtung höherer oder niedrigerer Wellenlängen verschoben hat.

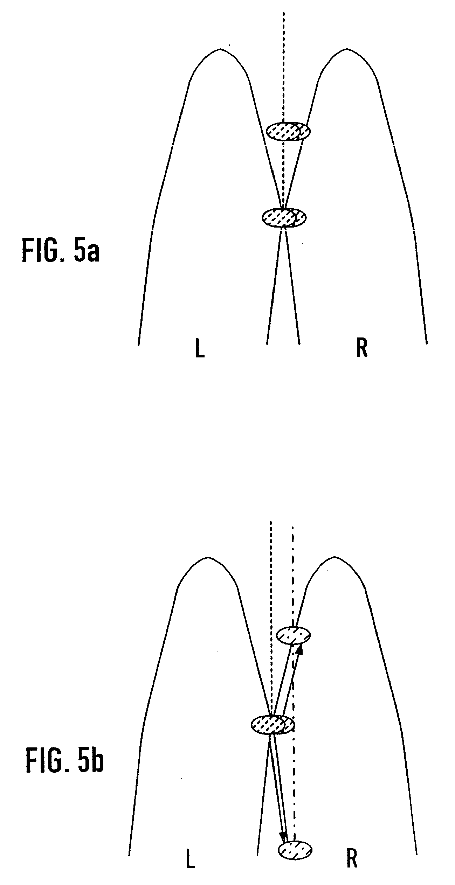

Auf Fig. 5a bis 5c sind Betriebszustände für einen Kanal aus Fig. 4c genauer aufgezeichnet. Die sich überlappenden Durchlasskurven der zwei Detektoren sind derart abgestimmt, dass deren Kreuzungspunkt mit der Referenzwellenlänge des dazugehörigen Kanals übereinstimmt. In Fig. 5a ist der Fall aufgezeichnet, bei dem die Trägerwellenlänge sich nicht verschoben hat, das bedeutet, mit der Referenzwellenlänge übereinstimmt.

In Fig. 5b ist der Fall aufgezeichnet, dass die Trägerwellenlänge sich zu einer höheren Wellenlänge verschoben hat. Es wird von einer Rotverschiebung ("Red shift") gesprochen. Dies ist eindeutig festzustellen, durch den Wert der Durchlasskurve des einen Detektors L bei der Trägerwellenlänge, der kleiner als der Wert der Durchlasskurve des anderen Detektors R für die gleiche Trägerwellenlänge ist.

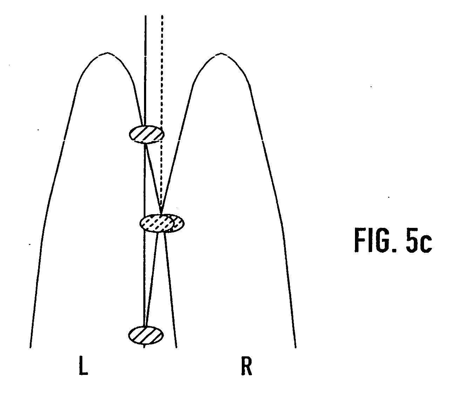

In Fig. 5c ist der andere Fall gezeichnet, bei dem die Trägerwellenlänge zu kleineren Wellenlängen verschoben ist. Es wird von einer Blauverschiebung-("Blue shift") gesprochen. Im Unterschied zu der Rotverschiebung, ist diesmal der Wert der Durchlasskurve des einen optischen Detektors L bei der Trägerwellenlänge größer als der Wert der Durchlasskurve des anderen Detektors R für die gleiche Trägerwellenlänge. Deshalb kann eindeutig zwischen einer Rotverschiebung und einer Blauverschiebung unterschieden werden und somit die Richtung einer Wellenlängenverschiebung der Trägerwellenlänge bezüglich der Referenzwellenlänge in diesem Kanal bestimmt werden.

Bei der Untersuchung von einem einzigen Kanal oder mehreren Kanälen der optischen Signale kann zwischen unterschiedlichen Betriebszustände gewählt werden. Die Wahl kann erfindungsgemäß getroffen werden mit Hilfe einer Abstimmvorrichtung wie z. B. eine Druck- oder Biegevorrichtung. In diesem Zusammenhang kann es von Vorteil sein, als Abstimmvorrichtung eine regelbare Wärmequelle zu verwenden, die an dem Wellenlängenmonitor angeschlossen ist. Diese Wärmequelle kann aus einem elektrischen Heizelement oder einem Peltierkühler mit Temperaturfühler und nachgeschaltetem Regelgerät bestehen. Über dieses Regelgerät wird dann die Temperatur des optischen Wellenlängenmonitors auf eine vorwählbaren Wert stabilisiert. Für die Wärmequelle gibt es verschiedene Ausführungsformen, wie z.B. eine Dickschicht auf Keramik oder Heizfolie, die mit dem Träger des optischen Wellenlängenmonitors (Chip) gut thermisch leitend verbunden wird. Die Wärmequelle kann aber auch direkt auf dem Träger realisiert werden, z.B. als Dünnschichtheizer wie dies bei thermooptischen Komponenten verwendet wird.

Durch die Wahl der Temperatur des optischen Wellenlängenmonitors wird ein Betriebszustand der Detektoren bestimmt. Die Änderung der Temperatur beeinflusst direkt Eigenschaften des Wellenlängendemultiplexers 4. Somit führt dies dazu, dass die Durchlasskurven der jeweiligen optischen Detektoren 6 bezüglich der zur Bestimmung gewählten Referenzwellenlängen der jeweiligen Kanäle sich auf kontrollierte Art und Weise verschieben.

Mit Hilfe von Eichmessungen bei denen z.B. ein Laser verwendet wird, der optische Signale bei wohl definierten Wellenlängen sendet, die vom erfindungsgemäßen Wellenlängenmonitor gemessen werden, können Eichwerte von Referenzwellenlängen bestimmt werden. Die definierten Wellenlänge werden entsprechend gewählt, so dass sie mit den nachträglich zu kontrollierenden Trägerwellenlägen übereinstimmen. Solche Eichmessungen werden bei unterschiedlichen Temperaturen und für jeden einzusetzenden Wellenlängenmonitor durchgeführt. Diese Eichwerten werden dann gespeichert, und dienen als Referenzwellenlänge für unterschiedliche Betriebszustände des Wellenlängenmonitors.

Die Verwendung von einem Oszillator für den vom Koppler 1 des erfindungsgemäßen Wellenlängenmonitors überkoppelnden Anteil der im Lichtwellenleiter 2 übermittelten optischen Signale ermöglicht eine zweifelfreie Bestimmungen der Eigenschaften von diesen optischen Signalen. Der höhere Signal-Rauschabstand sorgt für eine stabilere Messung.

Dementsprechend ist es möglich, optische Signale, die in Lichtwellenleiter übertragen werden, störungsfrei zu untersuchen. Dies ist besonders vorteilhaft in Fällen, wo optische Signale über lange Strecken übermittelt werden. Erfindungsgemäße Wellenlängenmonitoren können somit fast beliebig auf solchen Strecken eingesetzt werden. Und solche Messungen können dann dazu verwendet werden, um gegebenenfalls eine Rückkopplung auf die untersuchten optischen Signalen zu erzielen.

## Patentansprüche

1. Optischer Wellenlängenmonitor mit einem optischen Koppler (1) zum Überkoppeln von mindestens einem Teil der in einem Lichtwellenleiter (2) übertragenen optischen Signale, die mittels unterschiedlicher, in Kanälen unterteilten Trägerwellenlängen übertragen werden, wobei der Koppler (1) über einen optischen Verstärker (3) mit einem Wellenlängen-Demultiplexer (4) verbunden ist, der mindestens eine Trägerwellenlänge selektiert und die selektierten Trägerwellenlängen an bestimmte Ausgänge (5) weiterleitet, an denen optische Detektoren (6) angeschlossen sind, die jeweils ein in einem bestimmten Kanal detektiertes optisches Signal in ein elektrisches Signal umwandeln,
**dadurch gekennzeichnet, dass**
ein Oszillator (7) vorgesehen ist, der die dem optischen Verstärker (3) zugeführten optischen Signale mit einer Frequenz moduliert.

2. Optischer Wellenlängenmonitor nach Anspruch 1, **dadurch gekennzeichnet, dass** die jeweiligen Detektoren (6) jeweils mit einem Gleichrichterverstärker (8) verbunden sind, über den das jeweilige umwandelte elektrische Signale weiter geleitet ist, wobei jeder Gleichrichterverstärker (8) von dem Oszillator (7) gesteuert ist.

3. Optischer Wellenlängenmonitor nach Anspruch 1, **dadurch gekennzeichnet, dass** die optischen Signale im optischen Verstärker (3) nach dem Prinzip eines Choppers moduliert sind, in dem die Signale zwischen einem minimalen Wert, der dem Absorptionswert entspricht, und einem maximalen Wert, der dem verstärkten Wert entspricht, oszillieren.

4. Optischer Wellenlängenmonitor nach Anspruch 1, **dadurch gekennzeichnet, dass** jeweils zwei optische Detektoren (6) pro zu untersuchendem Kanal an den Ausgängen (5) des Wellenlängen-Demultiplexers (4) angeschlossen sind, wobei die Durchlasskurven der jeweiligen zwei optischen Detektoren (6) gegeneinander verschoben sind, und einen gemeinsamen überlappenden Bereich aufweisen.

5. Optischer Wellenlängenmonitor nach Anspruch 4, **dadurch gekennzeichnet, dass** der Kreuzungspunkt von zwei sich überlappenden Durchlasskurven auf die Trägerwellenlänge des zu untersuchenden Kanals zentriert ist.

6. Optischer Wellenlängenmonitor nach Anspruch 1, **dadurch gekennzeichnet, dass** er eine Abstimmvorrichtung zur Abstimmung der Durchlasskurven und zur Eichung der optischen Detektoren (6) aufweist.

7. Verfahren zur Untersuchung von optischen Signalen, die in einem Lichtwellenleiter (2) übertragen werden und aus unterschiedlichen Trägerwellenlängen in Kanälen unterteilt bestehen,
**dadurch gekennzeichnet, dass**
mindestens eine Eigenschaft dieser optischen Signale mit Hilfe eines optischen Wellenlängenmonitors nach Anspruch 1 gemessen wird, und mit vorgespeicherten Eichwerten verglichen werden.

8. Verfahren zur Untersuchung von optischen Signalen nach Anspruch 7, **dadurch gekennzeichnet, dass** eine Eigenschaft einen Extremwert der Amplitude der Leistung der optischen Signale in den zu untersuchenden Kanälen betrifft.

9. Verfahren zur Untersuchung von optischen Signalen nach Anspruch 7, **dadurch gekennzeichnet, dass** eine Eigenschaft eine Änderung der Amplitude der Leistung der optischen Signale in den zu untersuchenden Kanälen betrifft.

10. Verfahren zur Untersuchung von optischen Signalen nach Anspruch 9, **dadurch gekennzeichnet, dass** die Durchlasskurve der Detektoren (6) auf jeweils einen Punkt mit größter Steifheit abgestimmt werden.

11. Verfahren zur Untersuchung von optischen Signalen nach Anspruch 7, **dadurch gekennzeichnet, dass** eine Eigenschaft eine Verschiebung der Trägerwellenlänge in den zu untersuchenden Kanälen betrifft, und hierfür jeweils zwei optischen Detektoren (6) nach Anspruch 4 verwendet werden.

12. Verfahren zur Untersuchung von optischen Signalen nach Anspruch 7, **dadurch gekennzeichnet, dass** durch Regelung der Temperatur des optischen Wellenlängenmonitors mit Hilfe einer Wärmequelle, die Durchlasskurven der jeweiligen optischen Detektoren (6) um eine pro Kanal definierte Referenzwellenlänge abgestimmt werden, in Abhängigkeit der zu messenden Eigenschaften.

13. Verfahren zur Untersuchung von optischen Signalen nach Anspruch 7, **dadurch gekennzeichnet, dass** diese vorgespeicherten Eichwerte durch Messungen mit Hilfe eines einstellbaren Lasers an diesem optischen Wellenlängenmonitor ermittelt werden.

14. Verfahren zur Untersuchung von optischen Signalen nach Anspruch 7, **dadurch gekennzeichnet, dass** Ergebnisse dieser Vergleiche dazu verwendet werden, mindestens Teile der im Lichtwellenleiter (2) übertragenen optischen Signale zu kontrollieren.

## Claims

1. Optical wavelength monitor with an optical coupler (1) for cross-coupling at least a portion of the optical signals being transmitted in an optical waveguide (2), said signals being transmitted by means of different carrier wavelengths subdivided into channels, the coupler (1) being connected via an optical amplifier (3) to a wavelength demultiplexer (4) which selects at least one carrier wavelength and relays the selected carrier wavelengths to certain outputs (5) to which optical detectors (6) are connected which each convert an optical signal detected in a certain channel into an electrical signal,
**characterised in that**
an oscillator (7) is provided which modulates with a frequency the optical signals supplied to the optical amplifier (3).

2. Optical wavelength monitor according to Claim 1, **characterised in that** the respective detectors (6) are each connected to a rectifier amplifier (8) via which the respective converted electrical signal is relayed, each rectifier amplifier (8) being controlled by the oscillator (7).

3. Optical wavelength monitor according to Claim 1, **characterised in that** in the optical amplifier (3) the optical signals are modulated in accordance with the chopper principle, in which the signals oscillate between a minimum value, which corresponds to the absorption value, and a maximum value, which corresponds to the amplified value.

4. Optical wavelength monitor according to Claim 1, **characterised in that** in each instance two optical detectors (6) per channel to be examined are connected to the outputs (5) of the wavelength demultiplexer (4), the response curves of the respective two optical detectors (6) being shifted towards one another and exhibiting a common overlapping region.

5. Optical wavelength monitor according to Claim 4, **characterised in that** the point of intersection of two overlapping response curves is centred on the carrier wavelength of the channel to be examined.

6. Optical wavelength monitor according to Claim 1, **characterised in that** it exhibits an adapting apparatus for adapting the response curves and for calibrating the optical detectors (6).

7. Method for examining optical signals which are being transmitted in an optical waveguide (2) and which consist of different carrier wavelengths subdivided into channels,
**characterised in that**
at least one property of these optical signals is/are measured with the aid of an optical wavelength monitor according to Claim 1 and compared with prestored calibration values.

8. Method for examining optical signals according to Claim 7, **characterised in that** one property relates to an extreme value of the amplitude of the power output of the optical signals in the channels to be examined.

9. Method for examining optical signals according to Claim 7, **characterised in that** one property relates to a change in the amplitude of the power output of the optical signals in the channels to be examined.

10. Method for examining optical signals according to Claim 9, **characterised in that** the response curves of the detectors (6) are each matched to a point of greatest slope.

11. Method for examining optical signals according to Claim 7, **characterised in that** one property relates to a shift of the carrier wavelength in the channels to be examined, and for this purpose use is made in each instance of two optical detectors (6) according to Claim 4.

12. Method for examining optical signals according to Claim 7, **characterised in that** by regulation of the temperature of the optical wavelength monitor with the aid of a heat-source the response curves of the respective optical detectors (6) are adapted by a reference wavelength, defined for each channel, as a function of the properties to be measured.

13. Method for examining optical signals according to Claim 7, **characterised in that** these prestored calibration values are ascertained in respect of this optical wavelength monitor by means of measurements with the aid of an adjustable laser.

14. Method for examining optical signals according to Claim 7, **characterised in that** results of these comparisons are used for the purpose of monitoring at least portions of the optical signals transmitted in the optical waveguide (2).

## Revendications

1. Dispositif de surveillance de longueur d'onde optique comprenant un coupleur optique (1) pour extraire par couplage au moins une partie des signaux optiques transmis dans une fibre optique (2), lesquels sont transmis au moyen de longueurs d'onde porteuses différences divisées en canaux, le coupleur (1) étant relié avec un démultiplexeur de longueur d'onde (4) par le biais d'un amplificateur optique (3), lequel sélectionne au moins une longueur d'onde porteuse et retransmet les longueurs d'onde porteuses sélectionnées à des sorties (5) données auxquelles sont raccordés des détecteurs optiques (6) qui convertissent à chaque fois un signal optique détecté dans un canal donné en un signal optique, **caractérisé en ce qu'**il est prévu un oscillateur (7) qui module avec une fréquence les signaux optiques acheminés à l'amplificateur optique (3).

2. Dispositif de surveillance de longueur d'onde optique selon la revendication 1, **caractérisé en ce que** les détecteurs (6) respectifs sont à chaque fois raccordés avec un amplificateur redresseur (8) par le biais duquel est retransmis le signal à chaque fois converti en un signal électrique, chaque amplificateur redresseur (8) étant commandé par l'oscillateur (7).

3. Dispositif de surveillance de longueur d'onde optique selon la revendication 1, **caractérisé en ce que** les signaux optiques sont modulés dans les amplificateurs optiques (3) selon le principe d'un vibreur **en ce que** les signaux oscillent entre une valeur minimale, qui correspond à la valeur d'absorption, et une valeur maximale qui correspond à la valeur amplifiée.

4. Dispositif de surveillance de longueur d'onde optique selon la revendication 1, **caractérisé en ce que** deux détecteurs optiques (6) par canal à analyser sont à chaque fois raccordés aux sorties (5) du démultiplexeur de longueur d'onde (4), les courbes de passage des deux détecteurs optiques (6) respectifs étant décalées l'une par rapport à l'autre et présentant une zone de chevauchement commune.

5. Dispositif de surveillance de longueur d'onde optique selon la revendication 4, **caractérisé en ce que** le point d'intersection de deux courbes de passage qui se chevauchent est centré sur la longueur d'ode porteuse du canal à analyser.

6. Dispositif de surveillance de longueur d'onde optique selon la revendication 1, **caractérisé en ce qu'**il présente un dispositif d'accord pour accorder les courbes de passage et pour étalonner les détecteurs optiques (6).

7. Procédé d'analyse de signaux optiques qui sont transmis dans une fibre optique (2) et qui se composent de différentes longueurs d'onde porteuses divisées en canaux, **caractérisé en ce qu'**au moins une propriété de ces signaux optiques est mesurée à l'aide d'un dispositif de surveillance de longueur d'onde optique selon la revendication 1 puis comparée avec des valeurs étalon préalablement mémorisées.

8. Procédé d'analyse de signaux optiques selon la revendication 7, **caractérisé en ce que** la propriété concerne une valeur extrême de l'amplitude de la puissance des signaux optiques dans les canaux à analyser.

9. Procédé d'analyse de signaux optiques selon la revendication 7, **caractérisé en ce que** la propriété concerne une modification de l'amplitude de la puissance des signaux optiques dans les canaux à analyser.

10. Procédé d'analyse de signaux optiques selon la revendication 9, **caractérisé en ce que** la courbe de passage des détecteurs (6) est déterminée à chaque fois sur un point où la pente est au maximum.

11. Procédé d'analyse de signaux optiques selon la revendication 7, **caractérisé en ce que** la propriété concerne un décalage de la longueur d'onde porteuse dans les canaux à analyser et deux détecteurs optiques (6) sont utilisés à cet effet selon la revendication 4.

12. Procédé d'analyse de signaux optiques selon la revendication 7, **caractérisé en ce que** les courbes de passage des détecteurs optiques (6) respectifs sont accordées autour d'une longueur d'onde de référence définie pour chaque canal en fonction de la propriété à mesurer en régulant la température du dispositif de surveillance de longueur d'onde optique à l'aide d'une source de chaleur.

13. Procédé d'analyse de signaux optiques selon la revendication 7, **caractérisé en ce que** ces valeurs étalon sont déterminées par des mesures à l'aide d'un laser réglable réalisées sur ce dispositif de surveillance de longueur d'onde optique.

14. Procédé d'analyse de signaux optiques selon la revendication 7, **caractérisé en ce que** les résultats de ces comparaisons sont utilisés pour contrôler au moins des parties des signaux optiques transmis dans la fibre optique (2).
